# EUROPEAN PATENT SPECIFICATION

(11) **EP 3 121 301 B1**
(45) Date of publication and mention of the grant of the patent: **17.10.2018**
(21) Application number: 15765618.2
(22) Date of filing: 11.03.2015
(51) Int. Cl.: C22C 21/00, B21B 1/22, B21B 3/00, B23K 1/00, B23K 20/04, B23K 35/22, B23K 35/28, C22F 1/047, C22F 1/05, C22F 1/053, C22F 1/00

(54) **CLADDED ALUMINIUM-ALLOY MATERIAL AND PRODUCTION METHOD THEREFOR, AND HEAT EXCHANGER USING SAID CLADDED ALUMINIUM-ALLOY MATERIAL AND PRODUCTION METHOD THEREFOR**
PLATTIERTES ALUMINIUMLEGIERUNGSMATERIAL UND HERSTELLUNGSVERFAHREN DAFÜR SOWIE WÄRMETAUSCHER MIT DIESEM PLATTIERTEN ALUMINIUMLEGIERUNGSMATERIAL UND HERSTELLUNGSVERFAHREN FÜR DIESEN
MATÉRIAU D'ALLIAGE D'ALUMINIUM ENROBÉ ET SON PROCÉDÉ DE PRODUCTION, ET ÉCHANGEUR DE CHALEUR UTILISANT LEDIT MATÉRIAU EN ALLIAGE D'ALUMINIUM ENROBÉ ET SON PROCÉDÉ DE PRODUCTION

(30) Priority: 19.03.2014 JP 2014055718
(43) Date of publication of application: 25.01.2017
(73) Proprietor: UACJ Corporation, Tokyo 100-0004 (JP)
(72) Inventor: ANDO, Makoto, Tokyo 100-0004 (JP); NIIKURA, Akio, Tokyo 100-0004 (JP)
(74) Representative: TBK
(86) International application number: PCT/JP2015/001342
(87) International publication number: WO 2015/141193

(56) References cited:
- JP-A- H1 053 827
- JP-A- H09 310 137
- JP-A- H10 298 686
- JP-A- 2007 504 356
- JP-A- 2009 074 138
- JP-A- 2010 236 073
- JP-A- 2013 220 433
- JP-A- 2014 015 665
- JP-A- 2014 028 389
- US-A1- 2005 079 376
- US-A1- 2008 274 367

## Description

### Technical Field

The present invention relates to a highly corrosion resistant and highly formable cladded aluminum-alloy material and a production method thereof and specifically relates to a highly corrosion resistant and highly formable cladded aluminum-alloy material which is preferably used as a material constituting a path of a refrigerant or hot compressed air in a heat exchanger such as a radiator and to a production method thereof. The invention further relates to a heat exchanger using the highly corrosion resistant and highly formable cladded aluminum-alloy material and a production method thereof, and in particular relates to a part forming a flow path of an automobile heat exchanger and the like.

### Background Art

Since aluminum alloys are light, have high thermal conductivity and can exhibit high corrosion resistance by appropriate treatment, aluminum alloys are used for automobile heat exchangers such as radiators, capacitors, evaporators, heaters or intercoolers. As a tube material of an automobile heat exchanger, a two-layer clad material having an Al-Mn-based aluminum alloy such as 3003 alloy as the core and a brazing material of an Al-Si-based aluminum alloy or a sacrificial anode material of an Al-Zn-based aluminum alloy clad on a surface of the core or a three-layer clad material in which a brazing material of an Al-Si-based aluminum alloy is further clad on the other surface of the core of such a two-layer clad material is used. PTL 1 discloses a cladded material comprising an Aluminum Association 3xxx series alloy as the core, a 4xxx alloy as the cladding, and an aluminum interliner disposed between the core and the cladding. In addition, for example in PTL 2, the Example using Al-Zn-Mg-based alloy in the core material for high strength is shown. A heat exchanger is generally produced by combining a tube material of such a clad material with a corrugated fin material and brazing the materials at a high temperature around 600°C.

In general, an aluminum alloy having a melting point of 600°C or higher is used for a core material alloy of a brazing sheet, and an Al-Si-based alloy having a melting point of 600°C or lower is used for a brazing material alloy which is used for cladding. By producing a part of a heat exchanger using the brazing sheet, combining the part with other parts and heating the parts to a temperature around 600°C, only the brazing material of the brazing sheet is melted and brazed with the other parts, and a heat exchanger can be thus produced. However, because an oxide film is formed on the surface of aluminum, the parts are not joined by brazing unless the oxide film is removed. In general, brazing becomes possible by applying fluoride flux powder to remove the oxide film. When such a brazing sheet is used, many parts which constitute a heat exchanger can be brazed at the same time. Thus, a brazing sheet is widely used as a material of a heat exchanger.

The tube shape is more complex in new heat exchangers used for recent automobiles in order to further improve the performance. Accordingly, it is now required that the materials have higher formability. The formability of a tube material has been adjusted by H14 refining type achieved by process annealing during cold rolling or by H24 refining type achieved by finish annealing after cold rolling. However, it has become difficult to satisfy the recent demand for high formability by refining alone.

In addition, when a corrosive liquid exists on the inner or outer surface of the tube of a heat exchanger, a pitting hole may be made in the tube by pitting corrosion or pressure resistance may deteriorate because uniform corrosion reduces the tube thickness, resulting in the breakage of the tube. As a result, there is risk of the leakage of the air, coolant or refrigerant circulating inside. Moreover, when it is necessary to join a tube and a fin or to join a tube with itself for example, it is required that a brazing material is provided on the surfaces. Up to now, when the material is exposed to a severe corrosive environment due to snow melting salt or the like and a tube and a fin should be joined, for example in the case of the outer surface of the tube of a condenser, it has been attempted to balance the corrosion resistance and the brazing property by cladding the outer surface of the tube material with a layer having sacrificial anode effect as a coating material and further cladding the outer surface with a brazing material. However, as the tube shape has become complex as already described above, the corrosive liquid sometimes concentrates at a particular part, and simple cladding of a coating material as in the conventional techniques is sometimes insufficient for preventing the leakage.

Techniques for improving the formability and the corrosion resistance separately have been proposed. For example, techniques for improving the formability or the electric resistance welding property of a clad material are shown in PTLs 3 and 4. However, the PTLs do not describe any means for improving the corrosion resistance of the sacrificial anode material. On the other hand, a technique for improving the corrosion resistance of a clad material is shown in PTL 5. However, the PTL does not describe any means for improving the formability of the clad material.

Specifically, regarding the clad material described in PTL 3, the electric resistance welding property of the material is improved by adjusting the mean grain size of the core material in a cross section at right angles to the longitudinal direction to 30 µm or less. With respect to the sacrificial anode material, it is defined that the area percentage of Mg₂Si with a grain size of 0.2 µm or more is 0.5% or less, however, this is also means for improving the electric resistance welding property. Only the amounts of Zn and Mg are defined regarding the corrosion resistance of the sacrificial anode material, and a technique which would improve the corrosion resistance more than the conventional techniques is not described or suggested at all.

With respect to the clad material described in PTL 4, the electric resistance welding property of the material is improved by using a core material with a fibrous structure. Regarding the sacrificial anode material, it is defined that the hardness of the core material and the hardness of the sacrificial anode material are 50 Hv or more and that the ratio of hardness (sacrificial anode material/core material) is less than 1.0, however, this is means for securing the fatigue strength after braze heating. Only the amounts of Zn and Mn are defined regarding the corrosion resistance of the sacrificial anode material also in this document, and a technique which would improve the corrosion resistance more than the conventional techniques is not described or suggested at all.

On the other hand, regarding the clad material described in PTL 5, the corrosion resistance in an alkaline environment is improved by adjusting the grain size of the sacrificial anode material to 100 to 700 µm. However, only the components are defined regarding the core material, and the structure, the mechanical properties and the like thereof are not described. Also, PTL 4 does not describe or suggest the improvement of the formability at all.

### Citation List

### Patent Literature

PTL 1: US 2008/274367 A1
PTL 2: JP S55-161044 A
PTL 3: JP H08-291354 A
PTL 4: JP 2010-255014 A
PTL 5: JP H11-209837 A

### Summary of Invention

### Technical Problem

The invention has been completed to solve the problems and aims to provide a cladded aluminum-alloy material which has excellent formability when used for example as a tube material of a heat exchanger and excellent corrosion resistance after braze heating due to the coating material and a production method thereof and to provide a heat exchanger using the cladded aluminum-alloy material and a production method thereof . The cladded aluminum-alloy material with such a highly corrosion resistance and an excellent formability can be preferably used as a part forming a flow path of an automobile heat exchanger.

### Solution to Problem

The present inventors have conducted intensive studies on the problems, and as a result, the inventors have found that the problems can be solved by using a clad material composed of a core material and a coating material which have specific alloy compositions and metal structures for the clad material and thus completed the invention.

Namely, an aspect of the invention is directed to a cladded aluminum-alloy material comprising the features set forth in claim 1.

Another aspect of the invention is directed to a method for producing the cladded aluminum-alloy material according to claim 1, comprising the steps set forth in claim 2.

Another aspect of the invention is directed to a heat exchanger using the cladded aluminum-alloy material according to claim 1, wherein the heat exchanger comprises the feature set forth in claim 3. Further, another aspect of the invention is directed to a method for producing the heat exchanger according to claim 3, wherein the method comprises the feature set forth in claim 4.

### Advantageous Effects of Invention

The cladded aluminum-alloy material according to the invention can be formed excellently even into a complex tube shape when the cladded aluminum-alloy material is used as a tube material of a heat exchanger for example, and the cladded aluminum-alloy material exhibits excellent corrosion resistance after braze heating due to the coating material. A heat exchanger of an automobile or the like is provided using such a cladded aluminum-alloy material as a part forming a flow path or the like. The clad material also has excellent brazing properties such as erosion resistance and is preferably used as a tube material of an automobile heat exchanger further in view of the lightness and the excellent thermal conductivity.

### Brief Description of Drawings

[Fig. 1] A schematic figure illustrating a crystal grain surrounded by crystal grain boundaries in a rolled surface of a coating material.
[Fig. 2] A schematic figure illustrating a crystal grain size R1 in the plate thickness direction and a crystal grain size R2 in the rolling direction in a cross section of a core material along the rolling direction.
[Fig. 3] A polarized light microscopic image of a cross section along the rolling direction where a core material having a fibrous structure was subjected to anodic oxidation.

### Description of Embodiments

Preferable embodiments of the cladded aluminum-alloy material exhibiting high corrosion resistance and high formability according to the invention, the production method thereof, the heat exchanger using the cladded aluminum-alloy material and the production method thereof are explained in detail.

### 1. Layers constituting cladded aluminum-alloy material

The cladded aluminum-alloy material according to the invention has excellent formability because the components and the metal structure of the core material are appropriately controlled and has excellent corrosion resistance because the components and the metal structure of the films clad on both surfaces of the core material are appropriately controlled. An Al-Zn-Mg-based alloy with high strength is used for the core material of the aluminum alloy clad material of the invention. However, when Mg contained in the core material diffuses to the surface by brazing, the flux deteriorates due to the reaction of the flux and Mg, and the brazing property is decreased. Thus, by cladding both surfaces of the core material with the films, the diffusion of Mg to the surface is prevented, and brazing becomes possible. The thicknesses of the films are preferably 20 µm or more, further preferably 30 µm or more. When the thicknesses of the films are less than 20 µm, Mg in the core material diffuses to the surface of the clad material during brazing, and the brazing property may become insufficient. There is no particular upper limit to the thicknesses of the films from the viewpoint of performance, but the practical upper limit for the production is about 500 µm because the thickness of the cladded aluminum-alloy material of the invention is about 0.2 to 3 mm.

To join the cladded aluminum-alloy material of the invention to another part by brazing, both of or one of the surfaces of the films clad on the surfaces of the core material, which are not the core material sides of the films, are clad with a brazing material.

The components of the core material, the films and the brazing material are explained below.

### 2. Core Material

An aluminum alloy comprising 0.05 to 1.50 mass% (simply indicated by "%" below) Si, 0.05 to 2.00% Fe, 2.00 to 7.00 Zn and 0.50 to 3.00% Mg as essential elements is used for the core material.

In addition, an aluminum alloy which comprises one or, two or more selected from 0.05 to 1.50% Cu, 0.05 to 2.00% Mn, 0.05 to 0.30% Ti, 0.05 to 0.30% Zr, 0.05 to 0.30% Cr and 0.05 to 0.30% V as optional additional elements in addition to the essential elements may be used for the core material.

Furthermore, other elements as unavoidable impurities beside the essential elements and the optional additional elements, may be further comprised each in an amount of 0.05% or less and in a total amount of 0.15% or less in the core material.

### Si:

Si forms an Al-Fe-Mn-Si-based intermetallic compound with Fe and Mn and improves the strength of the core material through dispersion strengthening or improves the strength of the core material through solid solution strengthening by diffusing into the aluminum parent phase to form a solid solution. The Si content is 0.05 to 1.50%. For a content less than 0.05%, use of high purity aluminum metal is required, resulting in high cost. On the other hand, when the content exceeds 1.50%, the melting point of the core material decreases, and the core material is more likely to melt during brazing. A Si content is preferably 0.10 to 1.20%

### Fe:

Fe forms an Al-Fe-Mn-Si-based intermetallic compound with Si and Mn and improves the strength of the core material through dispersion strengthening. The Fe content is 0.05 to 2.00%. For a content less than 0.05%, use of high purity aluminum metal is required, resulting in high cost. On the other hand, when the content exceeds 2.00%, a giant intermetallic compound tends to be formed during casting, and the plasticity deteriorates. A Fe content is preferably 0.10 to 1.50%.

### Zn:

Zn forms an Mg-Zn-based intermetallic compound with Mg by aging at room temperature after braze heating and increases the strength of the core material by age hardening. The Zn content is 2.00 to 7.00%. When the content is less than 2.00%, the effect becomes insufficient, while when the content exceeds 7.00%, the melting point of the core material decreases and the core material is more likely to melt during brazing. The Zn content is preferably 2.00 to 6.00%.

### Mg:

Mg forms an Mg-Zn-based intermetallic compound with Zn by aging at room temperature after braze heating and increases the strength of the core material by age hardening. The Mg content is 0.50 to 3.00%. When the content is less than 0.50%, the effect becomes insufficient, while when the content exceeds 3.00%, the melting point of the core material decreases and the core material is more likely to melt during brazing. The Mg content is preferably 1.00 to 2.50%.

### Cu:

Cu may be contained because Cu increases the strength of the core material through solid solution strengthening. The Cu content is 0.05 to 1.50%. When the content is less than 0.05%, the effect becomes insufficient, while when the content exceeds 1.50%, the aluminum alloy is more likely to crack during casting. The Cu content is preferably 0.30 to 1.00%.

### Mn:

Mn forms an Al-Fe-Mn-Si-based intermetallic compound with Si and Fe and improves the strength of the core material through dispersion strengthening or improves the strength of the core material through solid solution strengthening by diffusing into the aluminum parent phase to form a solid solution, and thus Mn may be contained. The Mn content is 0.05 to 2.00%. When the content is less than 0.50%, the effects are insufficient, while when the content exceeds 2.00%, a giant intermetallic compound tends to be formed during casting, and the plasticity deteriorates. A Mn content is preferably 0.10 to 1.80%.

### Ti:

Ti may be comprised because Ti improves the strength of the core material through solid solution strengthening. The Ti content is 0.05 to 0.30%. When the content is less than 0.05%, the effect is insufficient. When the content exceeds 0.30%, a giant intermetallic compound tends to be formed, and the plasticity deteriorates. A Ti content is preferably 0.10 to 0.20%.

### Zr:

Zr may be comprised because Zr has effects of improving the strength of the core material through solid solution strengthening and coarsening the crystal grains after braze heating by precipitation of an Al-Zr-based intermetallic compound. The Zr content is 0.05 to 0.30%. When the content is less than 0.05%, the effects cannot be obtained. On the other hand, when the content exceeds 0.30%, a giant intermetallic compound tends to be formed, and the plasticity deteriorates. A Zr content is preferably 0.10 to 0.20%.

### Cr:

Cr may be comprised because Cr has effects of improving the strength of the core material through solid solution strengthening and coarsening the crystal grains after braze heating by precipitation of an Al-Cr-based intermetallic compound. The Cr content is 0.05 to 0.30%. When the content is less than 0.05%, the effects cannot be obtained. On the other hand, when the content exceeds 0.30%, a giant intermetallic compound tends to be formed, and the plasticity deteriorates. A Cr content is preferably 0.10 to 0.20%.

### V:

V may be comprised because V improves the strength of the core material through solid solution strengthening and also improves the corrosion resistance. The V content is 0.05 to 0.30%. When the content is less than 0.05%, the effects cannot be obtained. On the other hand, when the content exceeds 0.30%, a giant intermetallic compound tends to be formed, and the plasticity deteriorates. A V content is preferably 0.10 to 0.20%.

At least one of the elements Cu, Mn, Ti, Zr, Cr and V may be added to the core material when needed.

### 3. Coating Material

An aluminum alloy containing 0.05 to 1.50% Si, 0.05 to 2.00% Fe and 0.05 to 2.00% Mn as essential elements is used for the coating material.

In addition, an aluminum alloy which further comprises one or, two or more selected from 0.05 to 1.50% Cu, 0.05 to 0.30% Ti, 0.05 to 0.30% Zr, 0.05 to 0.30% Cr and 0.05 to 0.30% V as optional additional elements may be used for the coating material.

Furthermore, beside the essential elements and the optional additional elements, unavoidable impurities may be contained each in an amount of 0.05% or less and in a total amount of 0.15% or less.

### Si:

Si forms an Al-Fe-Si-based intermetallic compound with Fe and forms an Al-Fe-Mn-Si-based intermetallic compound with Fe and Mn, thus improves the strength of the coating material through dispersion strengthening or improves the strength of the coating through solid solution strengthening by solid solution into the aluminum parent phase. On the other hand, since Si shifts the potential of the coating material in the more noble direction, Si inhibits the sacrificial anticorrosion effect and deteriorates the corrosion resistance. The Si content is 0.05 to 1.50%. For a content less than 0.05%, use of high purity aluminum metal is required, resulting in high cost. On the other hand, when the content exceeds 1.50%, the pitting potential of the coating material is shifted in the more noble direction, and the sacrificial anticorrosion effect is lost, resulting in the deterioration of the corrosion resistance. A Si content is preferably 0.10 to 1.20%.

### Fe:

Fe forms an Al-Fe-Si-based intermetallic compound with Si and forms an Al-Fe-Mn-Si-based intermetallic compound with Si and Mn, thus improves the strength of the coating material through dispersion strengthening. The amount of Fe is 0.05 to 2.00%. For a content less than 0.05%, use of high purity aluminum metal is required, resulting in high cost. On the other hand, when the content exceeds 2.00%, a giant intermetallic compound tends to be formed during casting, and the plasticity deteriorates. A Fe content is preferably 0.10 to 1.50%.

### Mn:

Mn forms an Al-Mn-Si-based intermetallic compound with Si and forms an Al-Fe-Mn-Si-based intermetallic compound with Si and Fe. Mn thus increases the strength of the films through dispersion strengthening or increases the strength of the films through solid solution strengthening by diffusing into the aluminum parent phase to form a solid solution. The influence of the strength of the films on the entire strength is not as great as that of the core material. However, when the difference in strength between the films and the core material is too large, only the films are stretched unusually during hot clad rolling, and a clad material may not be produced. Thus, it is necessary to add Mn. The Mn content is 0.05 to 2.00%. When the content is less than 0.05%, the effects become insufficient, while when the content exceeds 2.00%, a huge intermetallic compound is apt to be formed during casting and the plasticity deteriorates. The Mn content is preferably 0.10 to 1.80%.

### Cu:

Cu may be comprised because Cu improves the strength of the brazing material through solid solution strengthening. The Cu content is 0.05 to 1.50%. When the content is less than 0.05%, the effect is insufficient, while when the content exceeds 1.50%, the aluminum alloy is more likely to crack during casting. A Cu content is preferably 0.30 to 1.00%.

### Ti

Ti may be comprised because Ti improves the strength of the coating material through solid solution strengthening and also improves the corrosion resistance. The Ti content is 0.05 to 0.30%. When the content is less than 0.05%, the effects cannot be obtained. When the content exceeds 0.30%, a giant intermetallic compound tends to be formed, and the plasticity deteriorates. A Ti content is preferably 0.05 to 0.20%.

### Zr

Zr may be comprised because Zr has effects of improving the strength of the coating material through solid solution strengthening and coarsening the crystal grains after braze heating by precipitation of an Al-Zr-based intermetallic compound. The Zr content is 0.05 to 0.30%. When the content is less than 0.05%, the effects cannot be obtained. On the other hand, when the content exceeds 0.30%, a giant intermetallic compound tends to be formed, and the plasticity deteriorates. A Zr content is preferably 0.10 to 0.20%.

### Cr:

Cr may be comprised because Cr has effects of improving the strength of the coating material through solid solution strengthening and coarsening the crystal grains after braze heating by precipitation of an Al-Cr-based intermetallic compound. The Cr content is 0.05 to 0.30%. When the content is less than 0.05%, the effects cannot be obtained. When the content exceeds 0.30%, a giant intermetallic compound tends to be formed, and the plasticity deteriorates. A Cr content is preferably 0.10 to 0.20%.

### V:

V may be comprised because V improves the strength of the coating material through solid solution strengthening and also improves the corrosion resistance. The V content is 0.05 to 0.30%. When the content is less than 0.05%, the effects cannot be obtained. When the content exceeds 0.30%, a giant intermetallic compound tends to be formed, and the plasticity deteriorates. A V content is preferably 0.05 to 0.20%.

At least one of the elements Cu, Ti, Zr, Cr and V may be added to the coating material when needed.

### 4. Brazing Material

An aluminum alloy containing 2.50 to 13.00% Si and 0.05 to 1.20% Fe as essential elements is used for the brazing material.

In addition, an aluminum alloy which comprises one or, two or more selected from 0.05 to 1.50% Cu, 0.05 to 2.00% Mn, 0.05 to 0.30% Ti, 0.05 to 0.30% Zr, 0.05 to 0.30% Cr and 0.05 to 0.30% V as the first optional additional elements is used for the brazing material. In addition, the aluminum alloy which comprises one or two selected from 0.001 to 0.050% Na and 0.001 to 0.050% Sr as the second optional additional elements in addition to the essential elements and the first optional additional elements, may be used for the brazing material.

Furthermore, beside the essential elements and the first and second optional additional elements, unavoidable impurities may be further contained each in an amount of 0.05% or less and in a total amount of 0.15% or less.

### Si:

The addition of Si decreases the melting point of the brazing material and generates a liquid phase, and thus brazing becomes possible. The Si content is 2.50 to 13.00%. When the content is less than 2.50%, only a small amount of liquid phase is generated, and brazing is unlikely to function. On the other hand, when the content exceeds 13.00%, the amount of Si which diffuses into the material to be brazed such as a fin becomes excessive in the case where the brazing material is used for a tube material for example, and the material to be brazed melts. A Si content is preferably 3.50 to 12.00%.

### Fe:

Since Fe tends to form an Al-Fe-based or Al-Fe-Si-based intermetallic compound, Fe decreases the effective Si amount for brazing and deteriorates the brazing property. The Fe content is 0.05 to 1.20%. For a content less than 0.05%, use of high purity aluminum metal is required, resulting in high cost. On the other hand, when the content exceeds 1.20%, the effective Si amount for brazing decreases, and brazing becomes insufficient. A Fe content is preferably 0.10 to 0.50%.

### Cu:

Cu may be comprised because Cu improves the strength of the brazing material through solid solution strengthening. The Cu content is 0.05 to 1.50%. When the content is less than 0.05%, the effect is insufficient, while when the content exceeds 1.50%, the aluminum alloy is more likely to crack during casting. A Cu content is preferably 0.30 to 1.00%.

### Mn:

Mn may be comprised because Mn improves the strength of the brazing material and the corrosion resistance. The Mn content is 0.05 to 2.00%. When the content exceeds 2.00%, a giant intermetallic compound tends to be formed during casting, and the plasticity deteriorates. On the other hand, when the content is less than 0.05%, the effects cannot be obtained sufficiently. A Mn content is preferably 0.05 to 1.80%.

### Ti:

Ti may be comprised because Ti improves the strength of the brazing material through solid solution strengthening and also improves the corrosion resistance. The Ti content is 0.05 to 0.30%. When the content is less than 0.05%, the effects cannot be obtained. When the content exceeds 0.30%, a giant intermetallic compound tends to be formed, and the plasticity deteriorates. A Ti content is preferably 0.10 to 0.20%.

### Zr:

Zr may be comprised because Zr has effects of improving the strength of the brazing material through solid solution strengthening and coarsening the crystal grains after braze heating by precipitation of an Al-Zr-based intermetallic compound. The Zr content is 0.05 to 0.30%. When the content is less than 0.05%, the effects cannot be obtained. When the content exceeds 0.30%, a giant intermetallic compound tends to be formed, and the plasticity deteriorates. A Zr content is preferably 0.10 to 0.20%.

### Cr:

Cr may be comprised because Cr has effects of improving the strength of the brazing material through solid solution strengthening and coarsening the crystal grains after braze heating by precipitation of an Al-Cr-based intermetallic compound. The Cr content is 0.05 to 0.30%. When the content is less than 0.05%, the effects cannot be obtained. When the content exceeds 0.30%, a giant intermetallic compound tends to be formed, and the plasticity deteriorates. A Cr content is preferably 0.10 to 0.20%.

### V:

V may be comprised because V improves the strength of the brazing material through solid solution strengthening and also improves the corrosion resistance. The V content is 0.05 to 0.30%. When the content is less than 0.05%, the effects cannot be obtained. When the content exceeds 0.30%, a giant intermetallic compound tends to be formed, and the plasticity deteriorates. A V content is preferably 0.10 to 0.20%.

### Na and Sr:

Na and Sr exhibit an effect of making the Si grains in the brazing material fine. The Na and Sr contents are 0.001 to 0.050%. When the contents are less than 0.001%, the effect cannot be obtained sufficiently. On the other hand, when the contents exceed 0.050%, the oxide layer becomes thick, and the brazing property deteriorates. The each of content is preferably 0.003 to 0.020%.

At least one of the elements Cu, Mn, Ti, Zr, Cr and V may be added to the brazing material when needed, in addition, at least one of the elements Na and Sr may be added to the brazing material when needed.

### 5. Crystal Grain Size of Coating Material

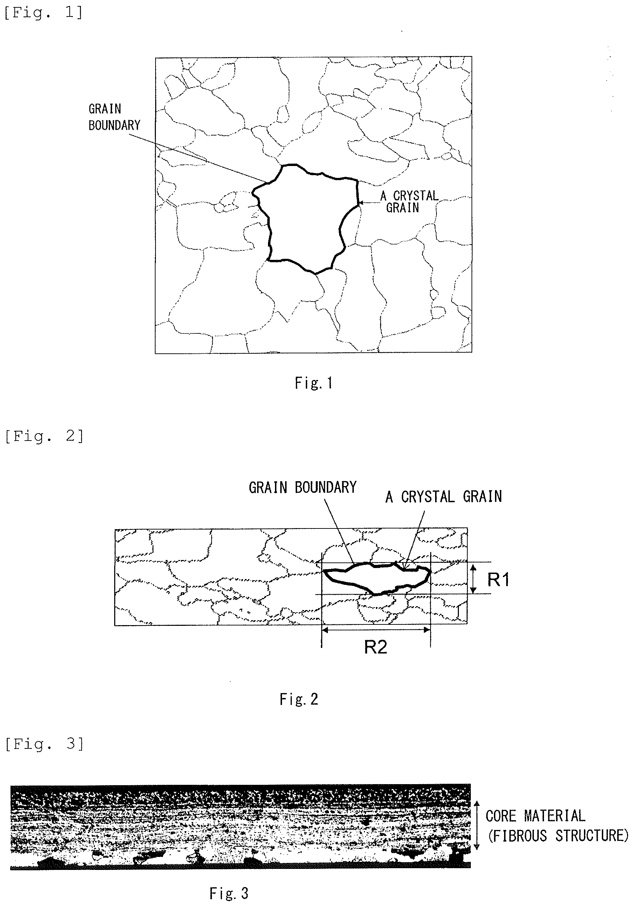

In the cladded aluminum-alloy material of the invention, the crystal grain size of the coating material before brazing heating is defined as at least60 µm, and the crystal grain size of the coating material after brazing heating is defined as at least 100 µm. It is aimed to improve the corrosion resistance of the coating material after braze heating. As shown in Fig. 1, the crystal grain size here means the equivalent circle diameter of a crystal grain, where the crystal grain is an area surrounded by grain boundaries when the rolled surface of the coating material is observed. A grain boundary is a boundary with a difference between the neighboring crystal orientations of 20 degrees or more. The method for measuring the crystal grain size is not particularly restricted, but electron backscatter diffraction (EBSD) is generally used. The reasons for the restriction are explained below.

The coating material is clad for the purpose of sacrificial anticorrosion in which corrosion perforation of a tube is prevented so that the corrosion is made to spread on the plane by corroding the coating material first. When the corrosion rate of the coating material is high, however, the coating material is lost at an early stage, and the sacrificial anticorrosion effect is lost, leading to corrosion perforation of the tube.

As a result of intensive studies, the inventors have found that the corrosion rate at the crystal grain boundaries in the coating material is higher than that in the crystal grains and that the corrosion rate can be restricted by decreasing the area of the crystal grain boundaries. To decrease the area of the crystal grain boundaries means to increase the grain size. Upon investigation in further detail, it has been found that the corrosion rate of the coating material is restricted and the clad aluminum-alloy material has excellent corrosion resistance when the crystal grain size of the coating material is at least 100 µm after braze heating. When the crystal grain size of the coating material is less than 100 µm after brazing heating, the corrosion rate of the coating material is high, and the sacrificial anticorrosion effect is lost at an early stage. Thus, effective corrosion resistance cannot be obtained. The crystal grain size of the coating material after brazing heating is preferably at least 120 µm. The upper limit of the crystal grain size of the coating material after brazing heating is not particularly restricted, but a value of 1000 µm or more is difficult to achieve.

The inventors have further investigated and found a correlation between the crystal grain size of the coating material before brazing heating and the crystal grain size of the coating material after brazing heating. That is, in order to obtain a coating material with a large crystal grain size after brazing heating, it is necessary that the crystal grain size of the coating material before brazing heating is large. As a result of further investigation into this point, it has been found that the crystal grain size of the coating material after brazing heating becomes at least 100 µm when the crystal grain size of the coating material before brazing heating is at least 60 µm. When the crystal grain size of the coating material before brazing heating is less than 60 µm, the crystal grain size of the coating material after brazing heating becomes less than 100 µm. In this regard, the crystal grain size before brazing heating is preferably at least 80 µm. The upper limit of the grain size of the coating material before brazing heating is not particularly restricted, but a value of 1000 µm or more is difficult to achieve.

### 8. Crystal Grain size of Core Material

In the cladded aluminum-alloy material of the invention, the ratio R1/R2 is restricted to be not more than 0.50, where R1 (µm) is the crystal grain size in the plate thickness direction and R2 (µm) is the crystal grain size in the rolling direction in a cross section of the core material along the rolling direction before brazing heating. The ratio is an index to improve the formability of the clad material before brazing heating. As shown in Fig. 2, the grain sizes R1 and R2 (µm) here are defined as the maximum diameter of a crystal grain in the plate thickness direction and the maximum diameter in the rolling direction, respectively, where the crystal grain is an area surrounded by grain boundaries when a cross section along the rolling direction of the clad material is observed. A grain boundary is a boundary with a difference between the neighboring crystal orientations of 20 degrees or more. The method for measuring the crystal grain sizes is not particularly restricted, but electron backscatter diffraction (EBSD) is generally used. In this regard, in the case where the degree of processing of the core material is very high, a fibrous structure like the structure shown in Fig. 3 is observed when the core material is subjected to anodic oxidation after mirror polishing and the surface subjected to the anodic oxidation is observed using a polarized light microscope. In such a case, the crystal grains are completely crushed in the plate thickness direction, and this case is defined as R1=0.

As already described above, so far, the formability of an aluminum alloy has been improved by adjusting the mechanical properties by the refining type determined by the conditions of process annealing or the reduction in a subsequent step. However, when a step such as bending under severe conditions is conducted, the material cracks. The inventors have conducted intensive studies and as a result found that excellent formability can be obtained when the crystal grains of the core material before brazing heating are flat in the rolling direction in a cross section along the rolling direction. In the invention, the ratio R1/R2 is used as an index of the flatness of the crystal grains. Upon investigation in detail by the inventors, it has been found that the crystal grains of the core material are flat enough and excellent formability is exhibited when the ratio R1/R2 is not more than 0.50. When the ratio R1/R2 exceeds 0.50, the flatness of the crystal grains of the core material is insufficient, and excellent processability cannot be achieved. Preferably, the ratio R1/R2 is not more than 0.40. The ratio R1/R2 is preferably small, because the degree of flatness becomes higher and the processability becomes better. As described above, the ratio R1/R2 may be 0 with R1=0.

### 7. Production Method of Cladded aluminum-alloy material

### 7-1. Embodiments of Production Method

The method for producing the clad aluminum-alloy material according to the invention includes a step of casting the aluminum alloys for the core material, the coating material and the brazing material, respectively, a hot rolling step of hot rolling the cast coating material slab and the cast brazing material slab to a predetermined thickness, respectively, a cladding step of cladding the coating material rolled to the predetermined thickness on both surfaces of the core material slab, and of cladding the brazing material rolled to the predetermined thickness on both of the coating material surfaces, or one of the coating material surfaces which is not at the core material side, and thus obtaining a clad material, a hot clad rolling step of hot rolling the clad material, a cold rolling step of cold rolling the hot-clad -rolled clad material, and one or more annealing steps of annealing the clad material either during or after the cold rolling step or both during and after the cold rolling step.

### 7-2. Casting Step and Hot Rolling Step

The conditions of the step of casting the core material, the coating material and the brazing material are not particularly restricted, but in general, water-cooled semi-continuous casting is employed. In the step of hot rolling the coating material and the brazing material to the predetermined thicknesses, the heating conditions are preferably a temperature of 400 to 560°C and a period of 1 to 10 hours. When the temperature is lower than 400°C, the plasticity is poor, and edge cracking or the like may be caused during rolling. In the case of a high temperature exceeding 560°C, the slabs may melt during heating. When the heating time is shorter than one hour, since the temperatures of the slabs become uneven, the plasticity is poor, and edge cracking or the like may be caused during rolling. When the heating time exceeds 10 hours, the productivity deteriorates notably.

### 7-3. Hot Clad Rolling Step

During the methods for producing the clad aluminum -alloy materials according to the invention, in the hot clad rolling step, the rolling start temperature is 400 to 520°C, and the number of rolling passes each with a rolling reduction of 30% or more is restricted to five or less while the temperature of the clad material is 200 to 400°C. The hot clad rolling step may be divided into a rough rolling step and a finish rolling step. In the finish rolling step, a reversing or tandem rolling mill is used. In a reversing rolling mill, a pass is defined as a one-way rolling, and in a tandem rolling mill, a pass is defined as rolling with a set of rolls.

First, the rolling pass is explained. As already described above, in the cladded aluminum-alloy material of the invention, it is necessary to increase the crystal grain size of the coating material before brazing heating. The crystal grains of the coating material are formed in an annealing step during the production, and as the strain accumulated in the coating material before annealing becomes greater, the driving force for the grain growth generated during annealing becomes larger, and larger crystal grains can be obtained. On the other hand, in the cladded aluminum-alloy material of the invention, it is necessary that the crystal grains of the core material are flat before brazing heating. The crystal grains of the core material are also formed in an annealing step during the production. As the strain accumulated in the core material before annealing becomes smaller, the driving force for the grain growth in the plate thickness direction generated during annealing becomes smaller, and as a result, flat crystal grains can be obtained.

That is, to increase the size of the crystal grains of the coating material and to flatten the crystal grains of the core material are incompatible. Accordingly, it has been difficult with the conventional techniques to achieve both. However, as a result of intensive studies, the inventors have found that both can be achieved by controlling the hot clad rolling step.

When a rolling pass with a large rolling reduction is conducted while the temperature of the hot clad rolling is relatively low, larger shear strain tends to be caused also in the center of the material. More specifically, in the hot clad rolling step, when the number of rolling passes with a rolling reduction of 30% or more is restricted to five or less while the temperature of the clad material is 200 to 400°C, the shear strain caused in the core material becomes small, and the crystal grains of the core material before brazing heating can be made flat. While the temperature of the clad material is higher than 400°C in the hot clad rolling step, dynamic recovery occurs during the hot clad rolling, and the shear strain caused in the core material does not become large even by a rolling pass with a rolling reduction of 30% or more. Thus, the flatness of the crystal grains of the core material is not affected. On the other hand, when the temperature of the clad material is lower than 200°C in the hot clad rolling step, cracking occurs during the hot rolling, and a clad material cannot be produced. Also, when the rolling reduction is less than 30% per pass, the shear strain caused in the core material does not become large, and the flatness of the crystal grains of the core material is not affected. The number of rolling passes with a rolling reduction of 30% or more is preferably four or less while the temperature of the clad material is 200 to 400°C. The rolling reduction is preferably 35% or more. When a rolling pass with a rolling reduction exceeding 50% is applied, cracking of the material or the like may occur.

On the other hand, even when the number of rolling passes with a rolling reduction of 30% or more is restricted to five or less while the temperature of the clad material is 200 to 400°C in the hot clad rolling step, large shear strain is caused in the coating material, which is close to the surface layer of the clad material. Thus, grains grow sufficiently in the coating material during process annealing, and large crystal grains can be formed in the coating material. That is, by the control in the hot clad rolling, the crystal grains of the coating material can be coarsened and the crystal grains of the core material can be made flat.

Next, the rolling start temperature is explained. The crystal grain size of the coating material before brazing heating is controlled by adjusting the rolling start temperature in the hot clad rolling step. When the start temperature of the hot clad rolling is 520°C or lower, large shear strain is caused in the coating material during the hot clad rolling, and the crystal grain size of the coating material before brazing heating can be increased. When the start temperature of the hot clad rolling exceeds 520°C, dynamic recovery occurs in the coating material during the hot clad rolling, and the shear strain becomes smaller. Thus, the crystal grain size of the coating material before brazing heating cannot be increased. On the other hand, when the material temperature is lower than 400°C at the start of the hot clad rolling, the material cracks during rolling. Thus, the start temperature of the hot clad rolling is 400 to 520°C. The start temperature of the hot clad rolling is preferably 420 to 500°C.

In the hot clad rolling step, the lower limit is not particularly set for the number of the passes with a rolling reduction of 30% or more conducted while the temperature of the clad material is 200 to 400°C. However, when no pass with a rolling reduction of 30% or more is included, many passes with a rolling reduction less than 30% are required to obtain the desired effects, and the productivity deteriorates. Accordingly, it is preferable that one or more passes with a rolling reduction of 30% or more are included. Moreover, the clad material is preferably heated at 400 to 560°C for 1 to 10 hours before the hot clad rolling. When the heating temperature is lower than 400°C, the material temperature during rolling becomes too low, and thus the material may crack during rolling. On the other hand, when the heating temperature exceeds 560°C, the brazing material may melt. When the heating time is shorter than one hour, the material temperature is unlikely to become even. On the other hand, when the heating time exceeds 10 hours, the productivity may deteriorate notably. The thickness after the hot clad rolling is not particularly restricted, but in general, a thickness of around 2.0 to 5.0 mm is preferable.

### 7-4. Annealing Step

In the methods for producing the cladded aluminum-alloy materials according to the invention, one or more annealing steps of annealing the clad material either during or after the cold rolling step or both during and after the cold rolling step are conducted. Specifically, (1) one or more process annealing steps are conducted during the cold rolling step; (2) one final annealing step is conducted after the cold rolling step; or (3) (1) and (2) are conducted. In the annealing steps, the clad material is held at 200 to 560°C for 1 to 10 hours.

The annealing steps are conducted for the purpose of adjusting the strain of the material, and by the steps, the coating material can be recrystallized, and large crystal grains as those described above can be obtained. When the temperature of the clad material is lower than 200°C in the annealing steps or when the holding time is shorter than one hour, the recrystallization of the coating material is not completed. When the annealing temperature exceeds 560°C, the brazing material may melt. Even when the holding time exceeds 10 hours, there is no problem with the properties of the clad material, but the productivity deteriorates notably. The upper limit of the number of the annealing steps is not particularly restricted, but the number is preferably three or less in order to avoid the increase of costs due to the increased number of steps.

### 7-5. Homogenization Step

The slab obtained by casting the aluminum alloy core material may be subjected to a homogenization step before the cladding step. In the homogenization step, the slab is preferably held at 450 to 620°C for 1 to 20 hours. When the temperature is lower than 450°C or when the holding time is shorter than one hour, the homogenization effect may be insufficient, while the core material slab may melt when the temperature exceeds 620°C. Also, when the holding time exceeds 20 hours, the homogenization effect is saturated, and the step is an uneconomic step.

### 7-6. Cladding Rate

In the cladded aluminum-alloy material of the invention, the cladding rate of the coating material (one surface) is preferably 3 to 25%. As described above, during the hot clad rolling step in the production steps, it is necessary that large shear strain is caused only in the coating material. However, when the cladding rate of the coating material exceeds 25%, sufficient shear strain cannot be caused in the entire coating material, and in some cases, the coating material cannot entirely be recrystallized. On the other hand, when the cladding rate of the coating material is less than 3%, the coating material is too thin, and thus the coating material cannot always be clad on the entire surface of the core material in the hot clad rolling. The cladding rate of the coating material is more preferably 5 to 20%. The cladding rate of the brazing material is not particularly restricted, but the brazing material is generally clad with cladding rates of around 3 to 30%.

### 8. Heat Exchanger

The cladded aluminum-alloy material is preferably used as a part of a heat exchanger such as a tube material and a header plate and in particular as a tube material. For example, a tube material in which a medium such as a coolant flows is produced by bending the cladded aluminum-alloy material and brazing the overlapped edges. Also, a header plate having a hole which is joined with an end of a tube material is produced by processing the cladded aluminum-alloy material. The heat exchanger according to the invention has a structure obtained for example by combining the tube material, a fin material and the header plate and brazing the materials at once.

As described above, a heat exchanger produced by brazing using the materials of the invention under general conditions is characterized in that the crystal grain size of the coating material of the cladd3ed aluminum-alloy material after brazing heating is at least 100 µm. The characteristic can improve the corrosion resistance of the coating material after brazing heating as described above.

The heat exchanger is assembled by attaching header plates to both ends of a tube material and placing a fin material on the outer surface of the tube material. Next, the overlapped edges of the tube material, the fin material and the outer surface of the tube material, the ends of the tube material and the header plates are each joined by one braze heating at once. While a fluxless brazing method, a Nocolok brazing method and a vacuum brazing method are used as the brazing method, the fluxless brazing method in an inert gas atmosphere is preferable. Brazing is generally conducted by heating at a temperature of 590 to 610°C for 2 to 10 minutes, preferably by heating at a temperature of 590 to 610°C for two to six minutes. The brazed materials are generally cooled at a cooling rate of 20 to 500°C/min.

### [Examples]

Next, the invention is explained in further detail based on Examples of the invention and Comparative Examples, but the invention is not restricted by the Examples.

Core material alloys with the alloy compositions shown in Table 1, coating material alloys with the alloy compositions shown in Table 2 and brazing material alloys with the alloy compositions shown in Table 3 were each cast by DC casting and finished by facing both surfaces. The thicknesses of the slabs after facing were all 400 mm. With respect to the brazing materials and the coating materials, the cladding rates which would give the desired thicknesses as the final thicknesses were calculated, and the materials were subjected to a heating step at 520°C for three hours and then hot rolled to the predetermined thicknesses which were the necessary thicknesses when the materials were combined.

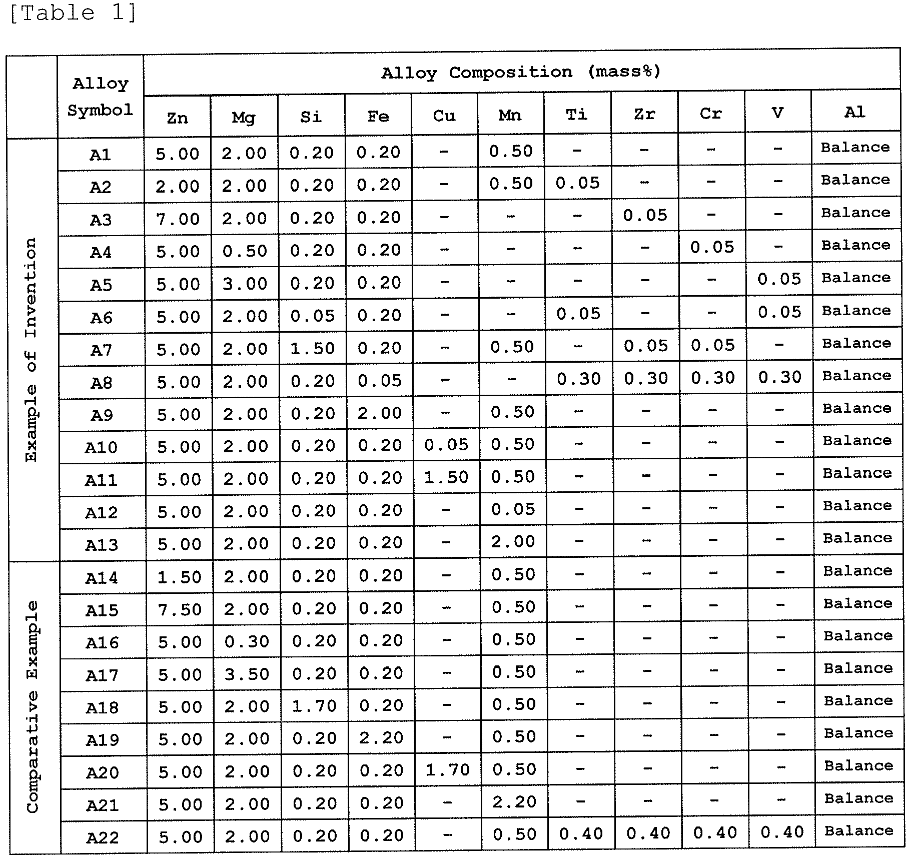

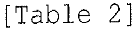

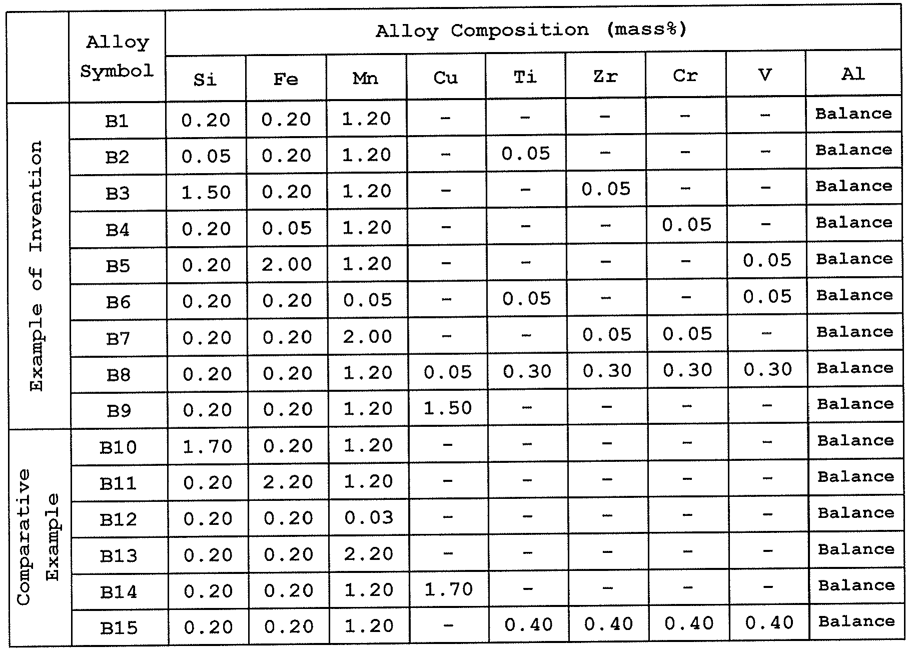

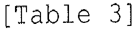

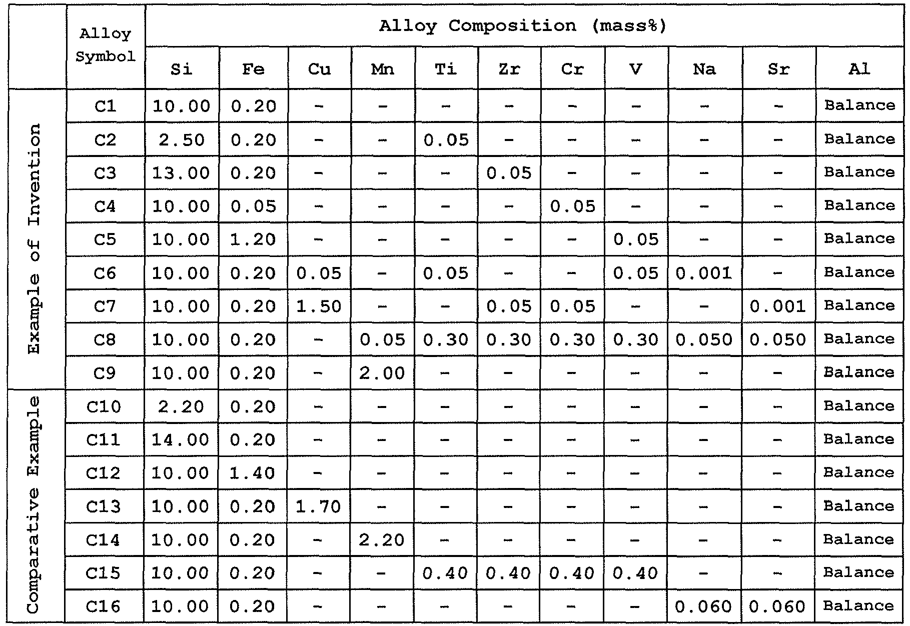

Using the alloys, the films 1 and 2 were provided on both surfaces of the core material, and the brazing materials 1 and 2 were provided on the films 1 and 2, respectively. In some of the examples, the brazing material 2 was not provided. The cladding rates of the films and the brazing materials were all 10%.

Such combined materials were subjected to a heating step and then to a hot clad rolling step, and four-layer and five-layer clad materials each with a thickness of 3.5 mm were produced. The temperatures and the times of the heating step and the start temperatures and the finish temperatures of the hot clad rolling step are shown in Table 4. Furthermore, in the hot clad rolling step, the clad materials were subjected to one or more rolling passes each with a rolling reduction of 30% or more while the temperatures of the clad materials were 200°C to 400°C, and the numbers of the rolling passes are shown in Table 4. Because the start temperatures were all 400°C or higher and the finish temperatures were all 200°C or higher and lower than 400°C in the Examples of the invention, it is obvious that there was a pass(passes) while the temperatures of the clad materials were 200°C to 400°C. After the hot clad rolling step, the clad materials were subjected to cold rolling. Some of the clad materials were subjected to batch process annealing (once or twice) during the cold rolling and then to final cold rolling, and clad material samples each with a final thickness of 0.3 mm were produced. Some of the other clad materials were subjected once to the final annealing after the final cold rolling step without the process annealing, and clad material samples each with a final thickness of 0.3 mm were produced. Further some of the other clad materials were subjected to both of the process annealing and final annealing, and clad material samples each with a final thickness of 0.3 mm were produced. The reductions of the cold rolling after the process annealing were all 30%. The conditions of the process annealing are shown in Table 4. As shown in Table 4, neither process annealing nor final annealing was conducted in E16 to 18. The hot clad rolling was not conducted in E18.

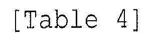

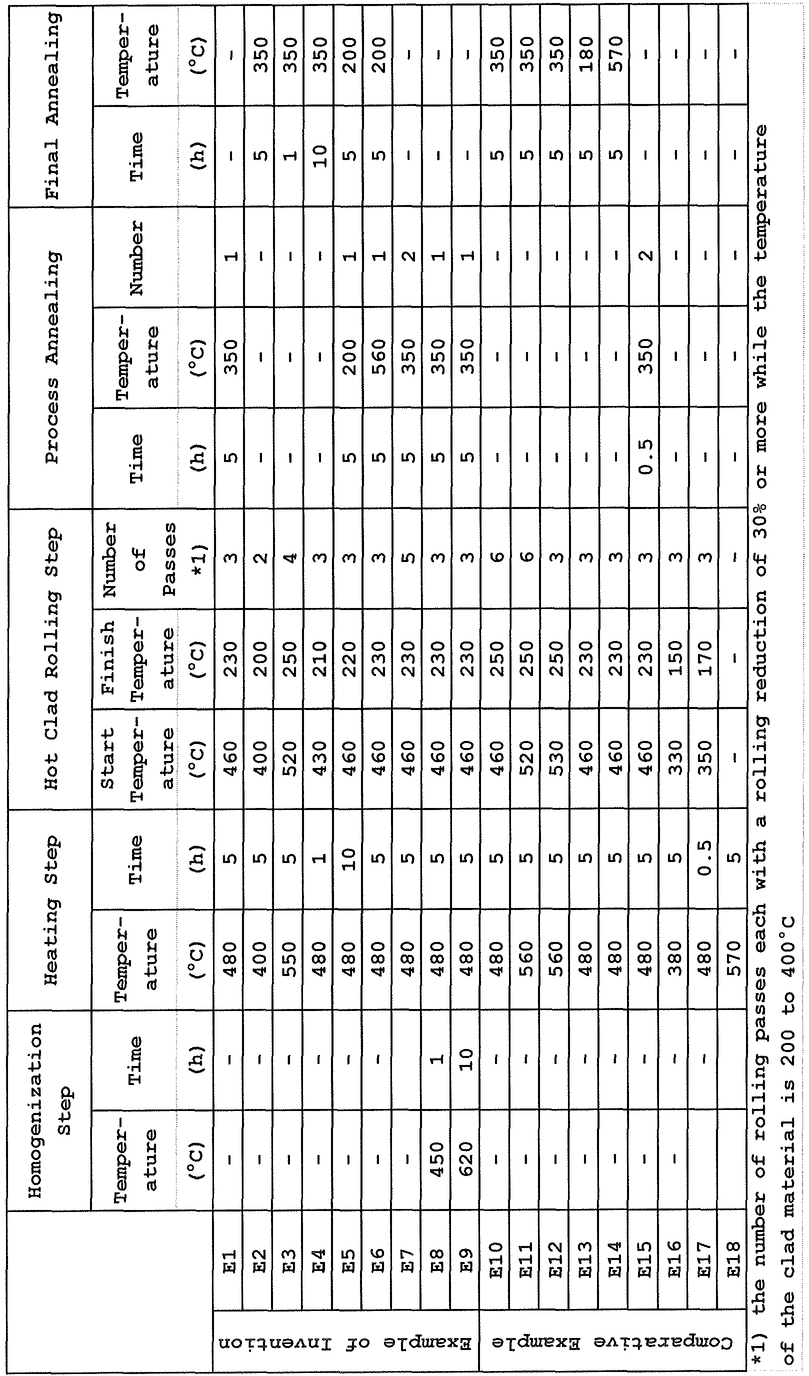

The manufacturability was given a mark "○" when no problem arose during the production steps and the material could be rolled to the final thickness of 0.3 mm. The manufacturability was given a mark "×" when the material cracked during the casting or the rolling and thus the material could not be rolled to the final thickness of 0.3 mm or when a clad material could not be produced due to melting during the heating step before the hot clad rolling step or during the process annealing step or due to poor pressure bonding during the hot clad rolling. The results are shown in Tables 5 to 7. The combinations of the core material alloy, the coating material alloy and the brazing material alloy of the respective clad materials are also shown in Tables 5 to 7.

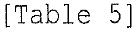

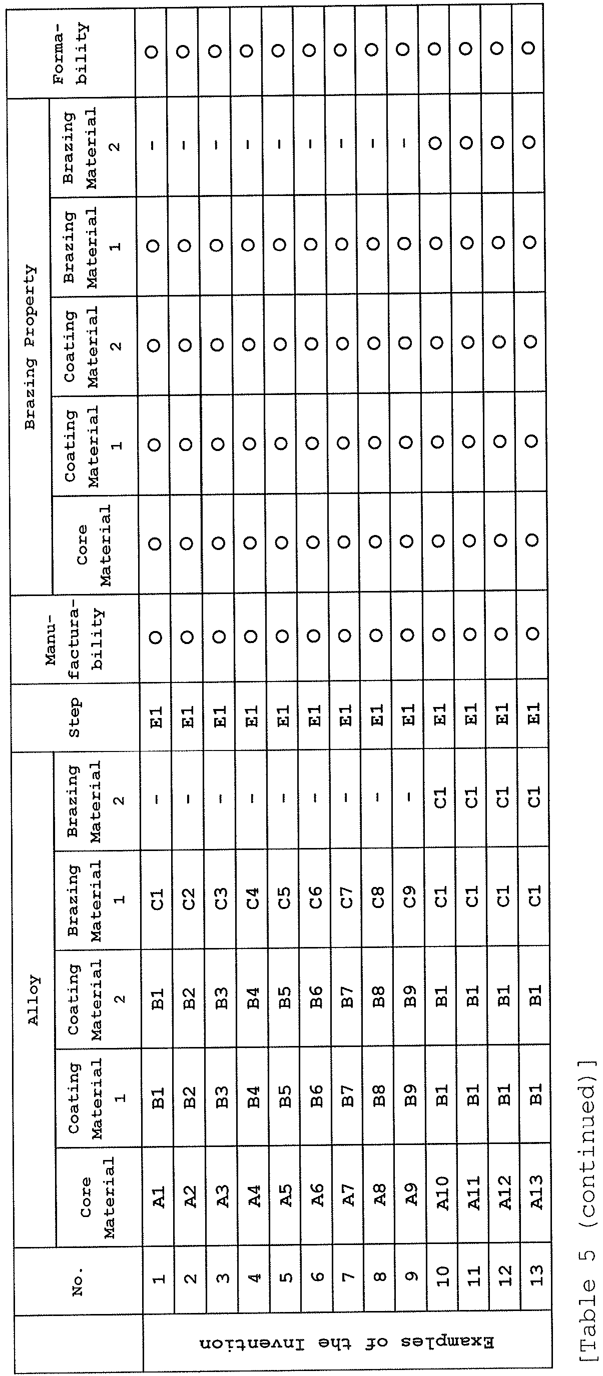

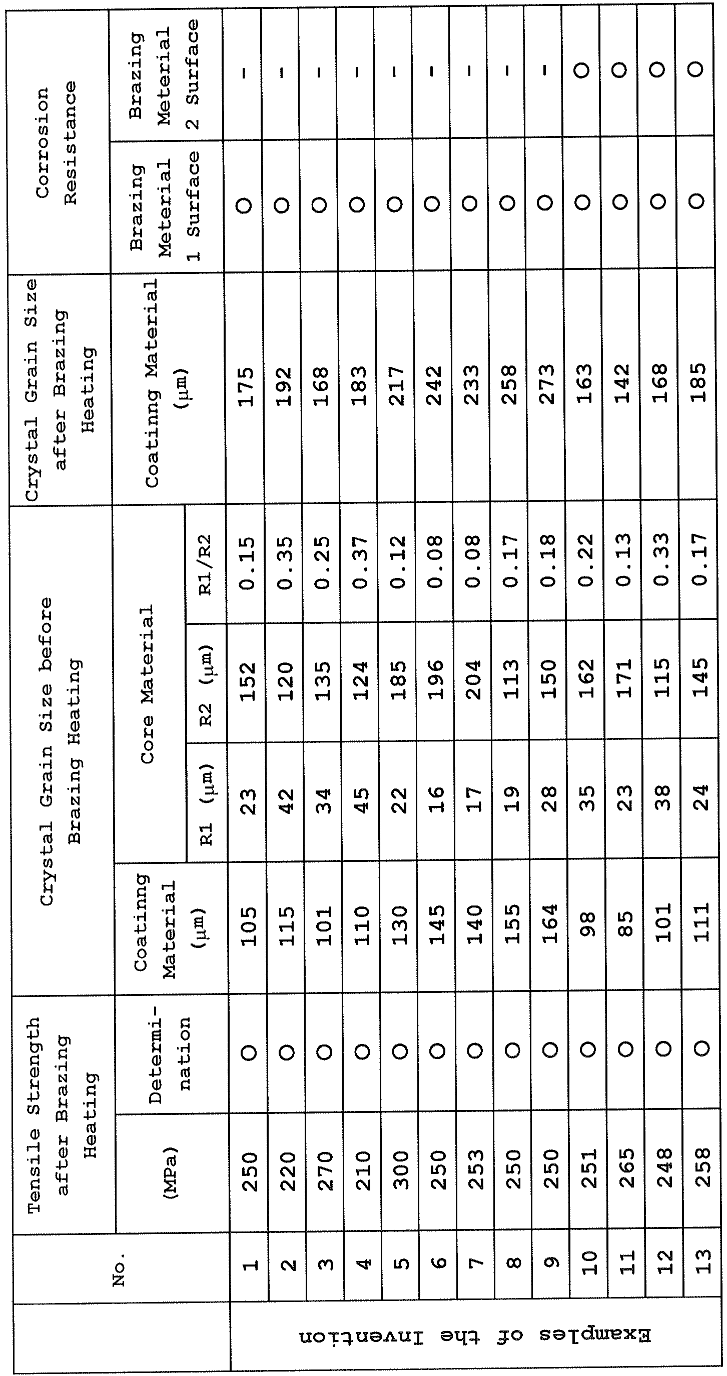

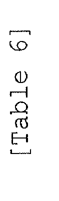

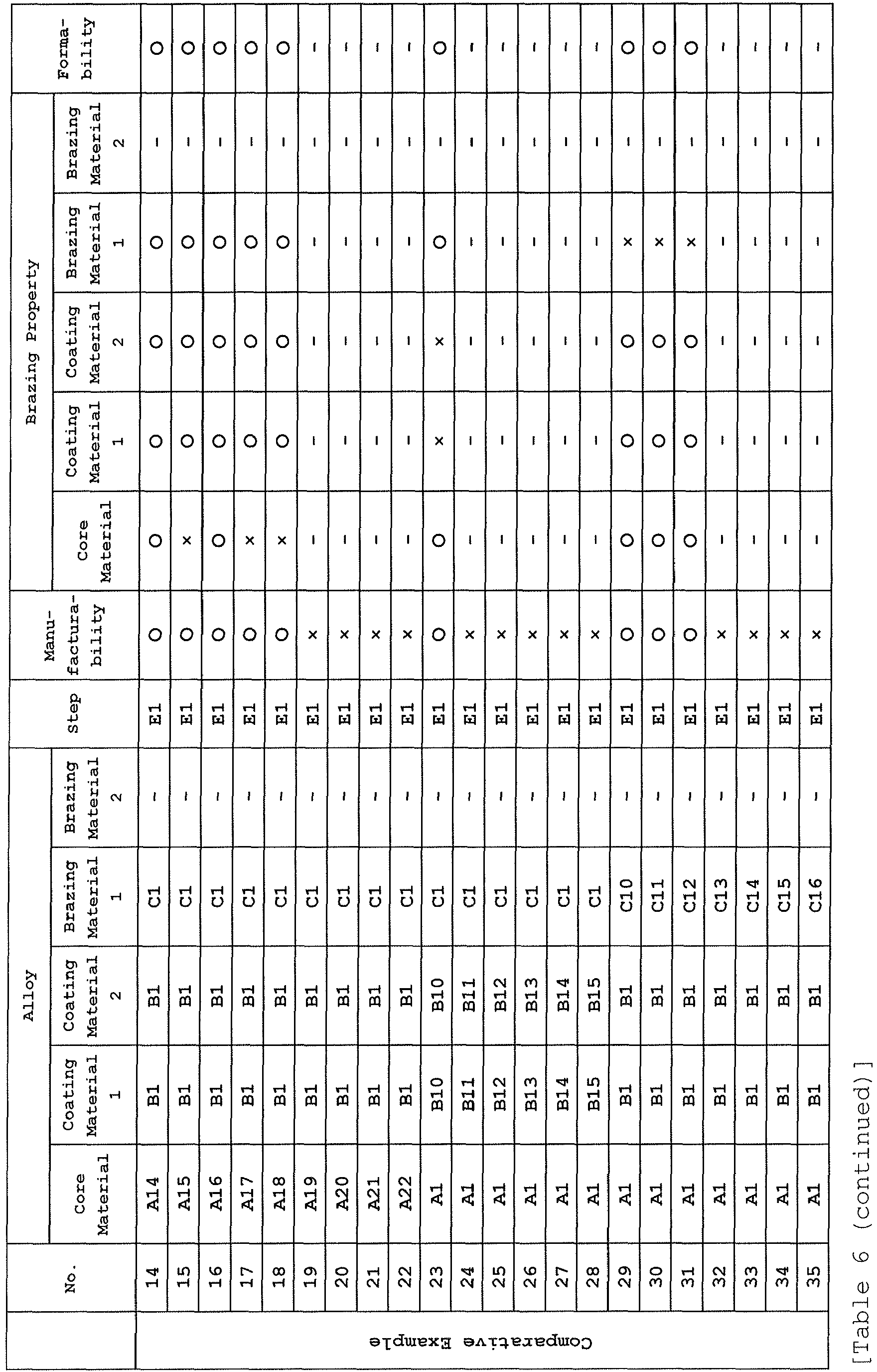

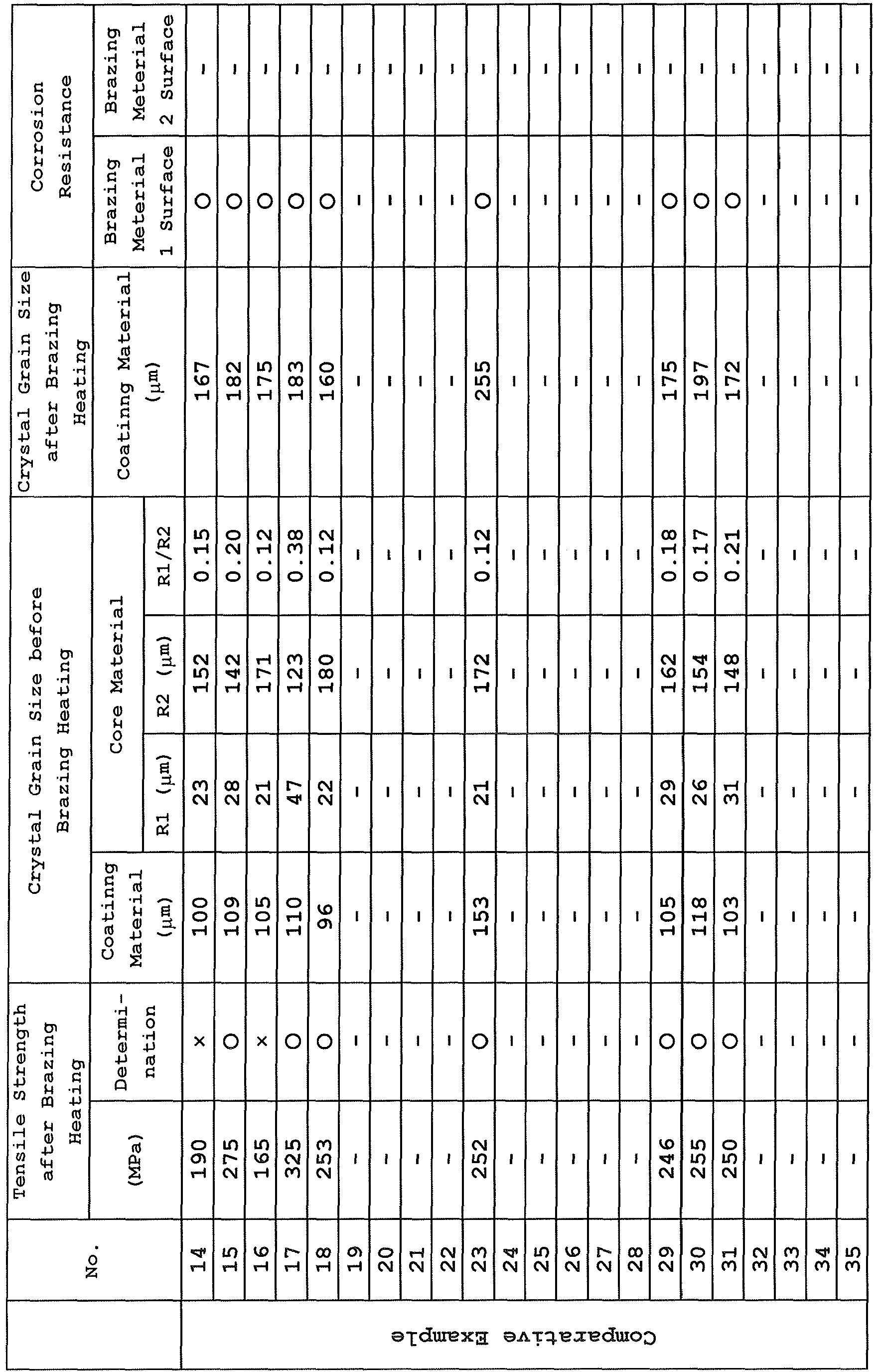

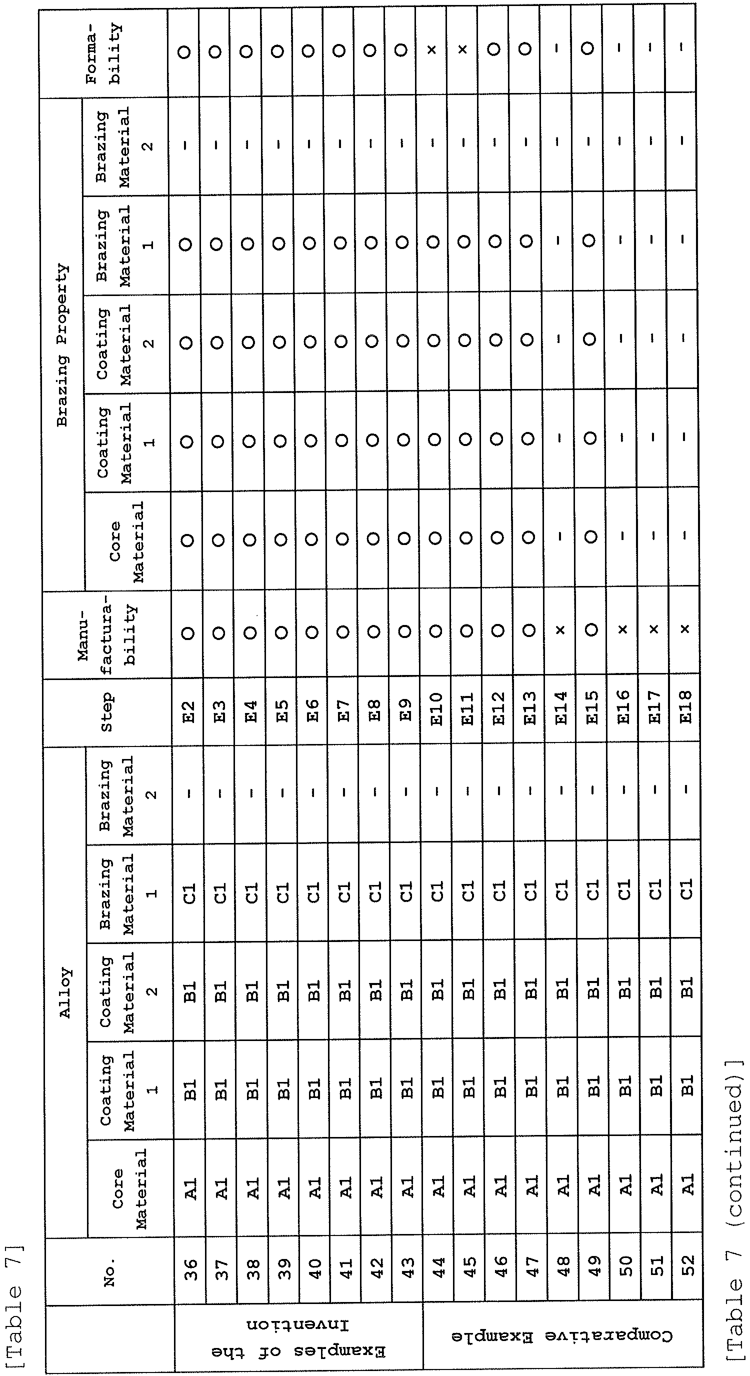

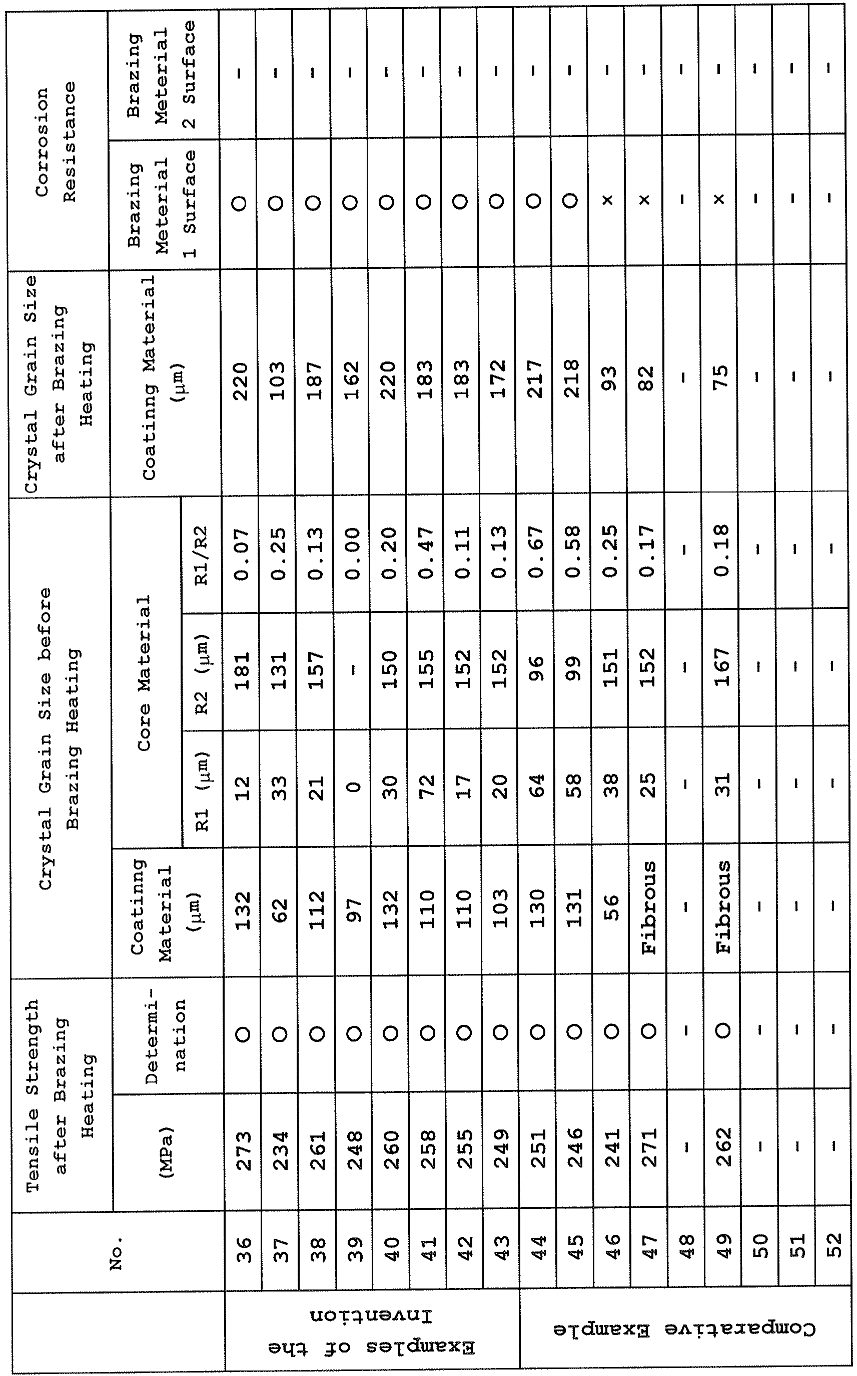

The following items of the clad material samples were evaluated, and the results are also shown in Tables 5 to 7. In this regard, in the examples with the manufacturability marked with "×" in Tables 6 and 7, samples could not be produced, and thus the following evaluation could not be conducted.

### (Evaluation of Formability)

JIS5 test pieces were cut out of the respective clad material samples in direction parallel to the rolling direction, stretched by 5% in the direction parallel to the rolling direction and bent at 180° with a bending radius R of 0.05 mm with the coating material surface inside. A resin was applied to the bent R cross sections so that the cross sections could be observed, and the cross sections were subjected to mirror polishing. Then, the test pieces were evaluated as to whether there was a crack using an optical microscope. As a result, the formability was determined to be at an acceptable level (○) when there was no crack in the core material and at an unacceptable level (×) when there was a crack in the core material. The occurrence of cracks in the both of brazing materials and coating materials was not evaluated.

### (Evaluation of Brazing Property)

A fin material with a thickness of 0.07 mm, refining type of H14 and an alloy composition of 3003 alloy containing 1.0% Zn was prepared and corrugated, and thus a heat exchanger fin material was prepared. The fin material was placed on a surface of brazing material 1 or brazing material 2 of a clad material sample, and without coating with flux, the sample was subjected to braze heating at 600°C for three minutes in a furnace with a nitrogen gas flow as an inert gas, thereby producing a miniature core sample. After the brazing, the fin was removed, and the fin joint ratio was determined from the ratio of the number of the contacts between the fin and the brazing material (the number of the ridges) and the parts where the fillets were formed. The brazing property was determined to be at an acceptable level (○) when the fin joint ratio of the miniature core sample was 95% or more and the clad material sample and the fin did not melt. On the other hand, the brazing property was determined to be at an unacceptable level (×) when the following cases (1) and (2) applied or the case (1) or (2) applied: (1) the fin joint ratio was less than 95%; and (2) at least one of the clad material sample and the fin melted.

### (Measurement of Tensile Strength after Brazing Heating)

The clad material samples were subjected to heat treatment at 600°C for three minutes (corresponding to braze heating) and then to a tensile test under the conditions of a speed of tensile testing of 10 mm/min and a gauge length of 50 mm according to JIS Z2241. The tensile strengths were read from the obtained stress-strain curves. As a result, the tensile strength was determined to be at an acceptable level (○) when the value was 200 MPa or more and at an unacceptable level (×) when the value was less than 200 MPa.

### (Measurement of Crystal Grain Size of Coating Material)

The surfaces of clad material samples before brazing heating (at 600°C for three minutes treatment corresponding to brazing heating) and clad material samples after brazing heating were polished and a brazing material was removed therefrom. Subsequently, L-LT surface of the coating material is subjected to mirror polishing, and samples for the measurement of the intermediate layer material crystal grain size were thus prepared. An area of 2 mm × 2 mm of each sample was analyzed by EBSD of a SEM (scanning electron microscope) . Boundaries with a difference between crystal orientations of 20 degrees or more were detected as the grain boundaries from the results, and the crystal grain sizes (equivalent circle diameters) were calculated. Ten random three points were selected for the measurement, and the arithmetic mean was regarded as the crystal grain size. When the recrystallization of the coating material had not been completed, the coating material had a fibrous structure, and the crystal grain size could not be measured. Such samples are indicated by "fibrous".

### (Measurement of Crystal Grain size of Core Material)

Clad material samples before brazing heating (at 600°C for three minutes treatment corresponding to brazing heating) were used. A resin was applied to the clad material samples and mirror polishing was conducted in such a manner that the cross sections along the rolling directions became the surfaces to be measured. Thus, samples for the measurement of the core material crystal grains were prepared. An area with a length of 2 mm and a thickness of 0.2 mm of each sample was analyzed by EBSD of a SEM, and from the results, boundaries with a difference between crystal orientations of 20 degrees or more were detected as the grain boundaries to detect the crystal grains. The maximum diameter R1 of a crystal grain in the thickness direction and the maximum diameter R2 in the rolling direction were measured, and the value R1/R2 was calculated. Three random crystal grains in a single field were measured, and the arithmetic mean was regarded as the ratio R1/R2. When no crystal grain boundary was detected by EBSD, the mirror-polished samples were subjected to anodic oxidation and observed using a polarized light microscope. The R1 was regarded as zero when a fibrous structure like the structure shown in Fig. 3 was observed.

### (Corrosion Resistance)

The same miniature core samples as those used for evaluating the brazing property were used. The surfaces which were not joined with the fins were masked with an insulating resin, and the surfaces which were joined with the fins were subjected to a CASS test based on JIS-H8502 for 1000 hours. As a result, the CASS corrosion resistance was determined to be excellent and at an acceptable level (○) when corrosion perforation did not develop in the clad material within the 1000 hours, and the CASS corrosion resistance was determined to be at an unacceptable level (×) when corrosion perforation developed within the 1000 hours. In this regard, only the surfaces clad with a brazing material were evaluated here. When a sample had a surface which was not clad with any brazing material, the surface was excluded from the evaluation. Appropriate miniature core samples could not be produced when the brazing property was "×", and thus the samples were excluded from the evaluation.

Examples 1 to 13 and 36 to 43 of the invention satisfied the conditions defined in the invention, and the manufacturability, the formability, the brazing properties, the tensile strengths after brazing and the corrosion resistance were all at acceptable levels.

On the contrary, in Comparative Example 14, since the Zn component of the core material was too little, the tensile strengths after brazing was unacceptable.

In Comparative Example 15, since the Zn component of the core material was too much, the brazing material melted. Thus, the brazing property was unacceptable.

On the contrary, in Comparative Example 16, since the Mg component of the core material was too little, the tensile strengths after brazing was unacceptable.

In Comparative Example 17, since the Mg component of the core material was too much, the brazing material melted. Thus, the brazing property was unacceptable.

In Comparative Example 18, since the Si component of the core material was too much, the brazing material melted. Thus, the brazing property was unacceptable.

In Comparative Example 19, since the Fe component of the core material was too much, a crack was caused during the cold rolling. Thus, a clad material could not be produced.

In Comparative Example 20, since the Cu component of the core material was too much, a crack was caused during the casting of core material. Thus, a clad material could not be produced.

In Comparative Example 21, since the Mn component of the core material was too much, a crack was caused during the cold rolling. Thus, a clad material could not be produced.

In Comparative Example 22, since the Ti, Zr, Cr and V components of the core material was too much, a crack was caused during the cold rolling. Thus, a clad material could not be produced.

In Comparative Example 23, since the Si components of the coating materials 1, 2 were too much, the coating materials 1, 2 melted. Thus, the brazing property was unacceptable.

In Comparative Example 24, since the Fe components of the coating materials 1, 2 were too much, a crack was caused during the cold rolling. Thus, a clad material could not be produced.

In Comparative Example 25, since the Mn components of the coating materials 1, 2 were too little, an unusual stretch in the coating material was caused during the hot clad rolling. Thus, a clad material could not be produced.

In Comparative Example 26, since the Mn components of the coating materials 1, 2 were too much, a crack was caused during the cold rolling. Thus, a clad material could not be produced.

In Comparative Example 27, since the Cu components of the coating materials 1, 2 were too much, a crack was caused during the casting. Thus, a clad material could not be produced.

In Comparative Example 28, since the Ti, Zr, Cr and V components of the coating materials 1, 2 were too much, a crack was caused during the cold rolling. Thus, a clad material could not be produced.

In Comparative Example 29, since the Si component of the brazing material 1 was too little, the brazing material 1 melted. Thus, the brazing property was unacceptable.

In Comparative Example 30, since the Si component of the brazing material 1 was too much, the brazing material 1 melted. Thus, the brazing property was unacceptable.

In Comparative Example 31, since the Fe component of the brazing material 1 was too much, the brazing material 1 melted. Thus, the brazing property was unacceptable.

In Comparative Example 32, since the Cu component of the brazing material 1 was too much, a crack was caused during the casting. Thus, a clad material could not be produced.

In Comparative Example 33, since the Mn component of the brazing material 1 was too much, a crack was caused during the cold rolling. Thus, a clad material could not be produced.

In Comparative Example 34, since the Ti, Zr, Cr and V components of the brazing material 1 were too much, a crack was caused during the cold rolling. Thus, a clad material could not be produced.

In Comparative Example 35, since the Na and Sr components of the brazing material 1 were too much, the brazing property was unacceptable.

In Comparative Examples 44 and 45, the numbers of passes with a rolling reduction of 30% or more were more than five while the temperatures of the materials were 250°C to 400°C during the clad hot rolling. Thus, the ratios R1/R2 of the core material crystal grains were more than 0.30 before the brazing, and the formability was unacceptable.

In Comparative Example 46, the temperature of the material was higher than 520°C at the start of the hot clad rolling. Thus, the crystal grain size of the coating material was less than 60 µm before the brazing, and the crystal grain size of the coating material was less than 100 µm after the brazing. Therefore, the corrosion resistance was unacceptable.

In Comparative Example 47, the temperature of the final annealing was lower than 200°C. Thus, the coating material had a fibrous structure before the brazing, and the crystal grain size of the coating material was less than 100 µm after the brazing. Therefore, the corrosion resistance was unacceptable.

In Comparative Example 48, since the temperature of the final annealing was higher than 560°C, the brazing material melted, and a brazing sheet could not be produced. Thus, the manufacturability was unacceptable.

In Comparative Example 49, the process annealing time was shorter than one hour. Thus, the coating material had a fibrous structure before the brazing, and the crystal grain size of the coating material was less than 100 µm after the brazing. Therefore, the corrosion resistance was unacceptable.

In Comparative Examples 51, 52, the start temperature of the hot clad rolling was lower than 400°C (annealing process was not included). Thus, a crack was caused during the hot clad rolling, and a brazing sheet with the desired thickness could not be produced.

In Comparative Example 52, since the atmosphere temperature of a heating furnace was too high, the start temperature of the hot clad rolling was too high. Therefore, the brazing material melted, thus a brazing sheet with the desired thickness could not be produced.

### Industrial Applicability

The cladded aluminum-alloy material according to the invention has high strength after brazing and is excellent in brazing properties such as the fin joint ratio and the erosion resistance and the corrosion resistance. Thus, the cladded aluminum-alloy material is preferably used as a part forming a flow path of an automobile heat exchanger in particular.

### Reference Signs List

R1: Crystal Grain size in the plate thickness direction in a core material cross section along the rolling direction
R2: Crystal Grain size in the rolling direction in a core material cross section along the rolling direction

## Claims

1. A cladded aluminum-alloy material comprising an aluminum alloy core material, a coating material used to clad both surfaces of the core material and a brazing material used to clad both of the coating material surfaces, or one of the coating material surfaces which is not at the core material side,
wherein the core material comprises an aluminum alloy consisting of 0.05 to 1.50 mass% Si, 0.05 to 2.00 mass% Fe, 2.00 to 7.00 mass% Zn, 0.50 to 3.00 mass% Mg, optionally one or two or more selected from 0.05 to 1.50 mass% Cu, 0.05 to 2.00 mass% Mn, 0.05 to 0.30 mass% Ti, 0.05 to 0.30 mass% Zr, 0.05 to 0.30 mass% Cr and 0.05 to 0.30 mass% V, and a balance of Al and unavoidable impurities,
the coating material comprises an aluminum alloy consisting of 0.50 to 1.50 mass% Si, 0.05 to 2.00 mass% Fe, 0.05 to 2.00 mass% Mn, optionally one or two or more selected from 0.05 to 0.30 mass% Ti, 0.05 to 0.30 mass% Zr, 0.05 to 0.30 mass% Cr and 0.05 to 0.30 mass% V, and a balance of Al and unavoidable impurities,
the brazing material comprises an aluminum alloy consisting of 2.50 to 13.00 mass% Si, 0.05 to 1.20 mass% Fe, optionally one or two or more selected from 0.05 to 1.50 mass% Cu, 0.05 to 2.00 mass% Mn, 0.05 to 0.30 mass% Ti, 0.05 to 0.30 mass% Zr, 0.05 to 0.30 mass% Cr and 0.05 to 0.30 mass% V, optionally one or two selected from 0.001 to 0.050 mass% Na and 0.001 to 0.050 mass% Sr, and a balance of Al and unavoidable impurities,
a crystal grain size of the coating material before brazing heating is at least 60 µm, and
in a cross section of the core material in the rolling direction before brazing heating, when R1 (µm) represents the crystal grain size in the plate thickness direction, and R2 (µm) represents the crystal grain size in the rolling direction, R1/R2 is not more than 0.50.

2. A method for producing the cladded aluminum-alloy material according to claim 1, comprising:
a step of casting the aluminum alloys for the core material, the coating material and the brazing material, respectively,
a hot rolling step of hot rolling the cast coating material slab and the cast brazing material slab to a predetermined thickness, respectively,
a cladding step of cladding the coating material rolled to the predetermined thickness on both surfaces of the core material slab, and of cladding the brazing material rolled to the predetermined thickness on both of the coating material surfaces, or one of the coating material surfaces which is not at the core material side, and thus obtaining a clad material,
a hot clad rolling step of hot rolling the clad material,
a cold rolling step of cold rolling the hot-clad -rolled clad material, and
one or more annealing steps of annealing the clad material either during or after the cold rolling step or both during and after the cold rolling step,
wherein in the hot clad rolling step, the rolling start temperature is 400 to 520°C, and the number of rolling passes each with a rolling reduction of 30% or more is restricted to five or less while the temperature of the clad material is 200 to 400°C, and
the clad material is held at 200 to 560°C for 1 to 10 hours in the annealing steps.

3. A heat exchanger using the cladded aluminum-alloy material according to claim 1, wherein the crystal grain size of the coating material after brazing heating is at least 100 µm.

4. A method for producing the heat exchanger according to claim 3, wherein the aluminum-alloy material is brazed in an inert gas atmosphere without flux.

## Patentansprüche

1. Plattiertes Aluminiumlegierungsmaterial, das ein Aluminiumlegierungskernmaterial, ein Überzugsmaterial, das dazu verwendet wird, beide Oberflächen des Kernmaterials zu plattieren, und ein Hartlötmaterial umfasst, das dazu verwendet wird, beide der Überzugsmaterialoberflächen oder eine der Überzugsmaterialoberflächen zu plattieren, die sich nicht auf der Kernmaterialseite befinden,
wobei das Kernmaterial eine Aluminiumlegierung umfasst, die aus 0,05 bis 1,50 Masse% Si, 0,05 bis 2,00 Masse% Fe, 2,00 bis 7,00 Masse% Zn, 0,50 bis 3,00 Masse% Mg, optional ein oder zwei oder mehr Elementen, die aus 0,05 bis 1,50 Masse% Cu, 0,05 bis 2,00 Masse% Mn, 0,05 bis 0,30 Masse% Ti, 0,05 bis 0,30 Masse% Zr, 0,05 bis 0,30 Masse% Cr und 0,05 bis 0,30 Masse% V ausgewählt sind, und einem Rest aus Al und unvermeidbaren Verunreinigungen besteht,
das Überzugsmaterial eine Aluminiumlegierung umfasst, die aus 0,50 bis 1,50 Masse% Si, 0,05 bis 2,00 Masse% Fe, 0,05 bis 2,00 Masse% Mn, optional ein oder zwei oder mehr Elementen, die aus 0,05 bis 0,30 Masse% Ti, 0,05 bis 0,30 Masse% Zr, 0,05 bis 0,30 Masse% Cr und 0,05 bis 0,30 Masse% V ausgewählt sind, und einem Rest aus Al und unvermeidbaren Verunreinigungen besteht,
das Hartlötmaterial eine Aluminiumlegierung umfasst, die aus 2,50 bis 13,00 Masse% Si, 0,05 bis 1,20 Masse% Fe, optional ein oder zwei oder mehr Elementen, die aus 0,05 bis 1,50 Masse% Cu, 0,05 bis 2,00 Masse% Mn, 0,05 bis 0,30 Masse% Ti, 0,05 bis 0,30 Masse% Zr, 0,05 bis 0,30 Masse% Cr und 0,05 bis 0,30 Masse% V ausgewählt sind, optional ein oder zwei Elementen, die aus 0,001 bis 0,050 Masse% Na und 0,001 bis 0,050 Masse% Sr ausgewählt sind, und einem Rest aus Al und unvermeidbaren Verunreinigungen besteht,
eine Kristallkorngröße des Überzugsmaterials vor der Hartlöterwärmung mindestens 60 µm beträgt und
R1/R2 in einem Querschnitt des Kernmaterials in der Walzrichtung vor der Hartlöterwärmung nicht mehr als 0,50 beträgt, wenn R1 (µm) die Kristallkorngröße in der Plattendickenrichtung darstellt und R2 (µm) die Kristallkorngröße in der Walzrichtung darstellt.

2. Verfahren zur Herstellung des plattierten Aluminiumlegierungsmaterials gemäß Anspruch 1, mit:
einem Schritt, in dem jeweils die Aluminiumlegierungen für das Kernmaterial, das Überzugsmaterial und das Hartlötmaterial gegossen werden,
einem Warmwalzschritt, in dem jeweils die gegossene Überzugsmaterialbramme und die gegossene Hartlötmaterialbramme auf eine vorbestimmte Dicke warmgewalzt werden,
einem Plattierungsschritt, in dem das auf die vorbestimmte Dicke gewalzte Überzugsmaterial auf beide Oberflächen der Kernmaterialbramme plattiert wird und in dem das auf die vorbestimmte Dicke gewalzte Hartlötmaterial auf beide der Überzugsmaterialoberflächen oder eine der Überzugsmaterialoberflächen plattiert wird, die sich nicht auf der Kernmaterialseite befinden, und somit ein Plattierungsmaterial erzielt wird,
einem Warmplattierungswalzschritt, in dem das Plattierungsmaterial warmgewalzt wird,
einem Kaltwalzschritt, in dem das warmplattierungsgewalzte Plattierungsmaterial kaltgewalzt wird, und
einem oder mehr Glühschritten, in denen das Plattierungsmaterial entweder während oder nach dem Kaltwalzschritt oder sowohl während als auch nach dem Kaltwalzschritt geglüht wird,
wobei die Walzstarttemperatur in dem Warmplattierungswalzschritt 400 bis 520°C beträgt und die Anzahl an Walzstichen mit jeweils einer Walzreduzierung von 30% oder mehr auf fünf oder weniger beschränkt wird, während die Temperatur des Plattierungsmaterials 200 bis 400°C beträgt, und
das Plattierungsmaterial in den Glühschritten 1 bis 10 Stunden lang bei 200 bis 560°C gehalten wird.

3. Wärmetauscher, der das plattierte Aluminiumlegierungsmaterial gemäß Anspruch 1 verwendet, wobei die Kristallkorngröße des Überzugsmaterials nach der Hartlöterwärmung mindestens 100 µm beträgt.

4. Verfahren zur Herstellung des Wärmetauschers gemäß Anspruch 3, wobei das Aluminiumlegierungsmaterial in einer Inertgasatmosphäre ohne Flussmittel hartgelötet wird.

## Revendications

1. Matériau d'alliage d'aluminium enrobé comprenant un matériau d'âme en alliage d'aluminium, un matériau de revêtement utilisé pour enrober les deux surfaces du matériau d'âme et un matériau de brasage utilisé pour enrober les deux surfaces du matériau de revêtement, ou une des surfaces du matériau de revêtement qui n'est pas du côté du matériau d'âme,
dans lequel le matériau d'âme comprend un alliage d'aluminium constitué de 0,05 à 1,50 % en masse de Si, 0,05 à 2,00 % en masse de Fe, 2,00 à 7,00 % en masse de Zn, 0,50 à 3,00 % en masse de Mg, éventuellement un ou deux ou plusieurs sélectionnés parmi 0,05 à 1,50 % en masse de Cu, 0,05 à 2,00 % en masse de Mn, 0,05 à 0,30 % en masse de Ti, 0,05 à 0,30 % en masse de Zr, 0,05 à 0,30 % en masse de Cr et 0,05 à 0,30 % en masse de V, et un équilibre d'Al et d'impuretés inévitables,
le matériau de revêtement comprend un alliage d'aluminium constitué de 0,50 à 1,50 % en masse de Si, 0,05 à 2,00 % en masse de Fe, 0,05 à 2,00 % en masse de Mn, éventuellement un ou deux ou plusieurs sélectionnés parmi 0,05 à 0,30 % en masse de Ti, 0,05 à 0,30 % en masse de Zr, 0,05 à 0,30 % en masse de Cr et 0,05 à 0,30 % en masse de V, et un équilibre d'Al et d'impuretés inévitables,
le matériau de brasage comprend un alliage d'aluminium constitué de 2,50 à 13,00 % en masse de Si, 0,05 à 1,20% en masse de Fe, éventuellement un ou deux ou plusieurs sélectionnés parmi 0,05 à 1,50 % en masse de Cu, 0,05 à 2,00 % en masse de Mn, 0,05 à 0,30 % en masse de Ti, 0,05 à 0,30 % en masse de Zr, 0,05 à 0,30 % en masse de Cr et 0,05 à 0,30 % en masse de V, éventuellement un ou deux sélectionné parmi 0,001 à 0,050 % en masse de Na et 0,001 à 0,050 % en masse de Sr, et un équilibre d'Al et d'impuretés inévitables,
une taille de grains cristallins du matériau de revêtement avant chauffage pour brasage est d'au moins 60 µm, et
dans une section transversale du matériau d'âme dans la direction de laminage avant chauffage pour brasage, lorsque R1 (µm) représente la taille de grains cristallins dans la direction d'épaisseur de feuille, et R2 (µm) représente la taille de grains cristallins dans la direction de laminage, R1/R2 n'est pas plus de 0,50.

2. Procédé de production du matériau d'alliage d'aluminium selon la revendication 1, comprenant :
une étape de coulée des alliages d'aluminium pour le matériau d'âme, le matériau de revêtement et le matériau de brasage, respectivement,
une étape de laminage à chaud pour laminer à chaud la plaque de matériau de revêtement coulée et la plaque de matériau de brasage coulée à une épaisseur prédéterminée, respectivement,
une étape d'enrobage pour enrober le matériau de revêtement laminé à l'épaisseur prédéterminée sur les deux surfaces de la plaque de matériau d'âme, et pour enrober le matériau de brasage laminé à l'épaisseur prédéterminée sur les deux surfaces de matériau de revêtement, ou une des surfaces de matériau de revêtement qui n'est pas du côté du matériau d'âme, et obtenant ainsi un matériau enrobé,
une étape de laminage d'enrobage à chaud pour laminer à chaud le matériau enrobé, une étape de laminage à froid pour laminer à froid le matériau enrobé laminé à chaud, et
une ou plusieurs étapes de recuit pour recuire le matériau enrobé soit pendant ou après l'étape de laminage à froid ou à la fois pendant et après l'étape de laminage à froid,
dans lequel dans l'étape de laminage d'enrobage à chaud, la température de départ de laminage est 400 à 520 °C, et le nombre de passages de laminage chacun avec une réduction de laminage de 30 % ou plus est restreint à cinq ou moins tandis que la température du matériau d'enrobage est 200 à 400 °C, et
le matériau d'enrobage est maintenu à 200 à 560 °C pour 1 à 10 heures dans les étapes de recuit.

3. Échangeur de chaleur utilisant le matériau d'alliage d'aluminium enrobé selon la revendication 1, dans lequel la taille de grains cristallins du matériau de revêtement après un chauffage par brasage est au moins 100 µm.

4. Procédé de production de l'échangeur de chaleur selon la revendication 3, dans lequel le matériau d'alliage d'aluminium est brasé dans une atmosphère de gaz inerte sans écoulement.
